# EUROPEAN PATENT APPLICATION

(11) **EP 4 614 430 A1**
(43) Date of publication of application: **10.09.2025**
(21) Application number: 25162147.0
(22) Date of filing: 06.03.2025
(51) Int. Cl.: G06T 3/18, H04N 5/262, H04N 7/14

(54) **SYSTEMS AND METHODS FOR IMAGE CORRECTION IN CAMERA SYSTEMS USING ADAPTIVE IMAGE WARPING**

(30) Priority: 08.03.2024 US 202418600098
(71) Applicant: Huddly AS, 0279 Oslo (NO)
(72) Inventor: KORNELIUSSEN, Jan Tore, 0279 Oslo (NO); KARAM, Christina, 0279 Oslo (NO)
(74) Representative: Finnegan Europe LLP

(57) **Abstract**

A videoconferencing system for adjusting perspective views using adaptive image warping includes an image warping unit including at least one processor. The at least one processor is programmed to: receive an overview video stream from a camera in the videoconferencing system; determine, based on analysis of at least one test frame from the overview video stream, at least one region of interest represented within the at least one test frame; determine one or more indicators of actual camera perspective relative to the at least one region of interest; determine a target camera perspective relative to the at least one region of interest, wherein the target camera perspective is different from the actual camera perspective; determine at least one image transformation based on a difference between the actual camera perspective and the target camera perspective; apply the at least one image transformation to one or more subframe regions of a plurality of image frames of the overview stream to generate at least one image warped primary video stream; and cause the at least one image warped primary video stream to be shown on a display.

## Description

### TECHNICAL FIELD AND BACKGROUND

The present disclosure relates generally to camera systems and, more specifically, to systems and methods for real-time correction of image distortion in camera systems using adaptive image warping.

In some meeting room setups, wide-angle or fisheye lenses may be used to capture a larger field of view. Such lenses may distort an image or video stream captured and displayed by the lens, making objects (e.g., meeting participants, white boards, furniture) appear stretched or distorted and making straight lines appear curved. Thus, there is a need for a camera system or method that can correct this distortion, making a video feed in, for example, a videoconference appear more natural and visually appealing.

Further, meeting rooms come in various sizes and shapes, and not all participants in a meeting or videoconference may be seated directly in front of a camera. Thus, there is a need for a camera system or method that can adjust its view and perspective angle to ensure that most or all participants are visible on a video stream, display, or screen. Such systems and methods may improve inclusivity and ensure that each meeting participant's contribution are equally visible during the meeting.

Additionally, a meeting room may be used for different purposes. For example, a meeting room may be used for a presentation, and that same meeting room may later be used for a training session. Thus, there is a need for a camera system or method that may include adjustable camera settings, ensuring that content being discussed is clear and visible to remote participants in a videoconferencing context.

Some meeting rooms may have limited space for camera placement, and thus cameras placed in those meeting rooms may not have an optimal view of the meeting room. Thus, there is a need for a camera system or method that can capture a broader field of view and present it in standard screen aspect ratios without unnecessary cropping or distortion.

### SUMMARY

Disclosed embodiments may address one or more of these challenges. The disclosed cameras and camera systems may include a smart camera or multi-camera system that understands the dynamics of the meeting room participants (e.g., using artificial intelligence (AI), such as trained networks) and provides an engaging experience to far end or remote participants based on, for example, the number of people in the room, who is speaking, who is listening, and where attendees are focusing their attention. Examples of meeting rooms or meeting environments may include, but are not limited to, meeting rooms, boardrooms, classrooms, lecture halls, meeting spaces, and the like.

Consistent with disclosed embodiments, a videoconferencing system for adjusting perspective views using adaptive image warping includes an image warping unit including at least one processor. The at least one processor is programmed to: receive an overview video stream from a camera in the videoconferencing system; determine, based on analysis of at least one test frame from the overview video stream, at least one region of interest represented within the at least one test frame; determine one or more indicators of actual camera perspective relative to the at least one region of interest; determine a target camera perspective relative to the at least one region of interest, wherein the target camera perspective is different from the actual camera perspective; determine at least one image transformation based on a difference between the actual camera perspective and the target camera perspective; apply the at least one image transformation to one or more subframe regions of a plurality of image frames of the overview stream to generate at least one image warped primary video stream; and cause the at least one image warped primary video stream to be shown on a display.

Other disclosed embodiments provide at least one processor. The at least one processor is programmed to: receive an overview video stream from a camera in the videoconferencing system; determine, based on analysis of at least one test frame from the overview video stream, at least one region of interest represented within the at least one test frame; determine one or more indicators of actual camera perspective relative to the at least one region of interest; determine a target camera perspective relative to the at least one region of interest, wherein the target camera perspective is different from the actual camera perspective; determine at least one image transformation based on a difference between the actual camera perspective and the target camera perspective; apply the at least one image transformation to one or more subframe regions of a plurality of image frames of the overview stream to generate at least one image warped primary video stream; and cause the at least one image warped primary video stream to be shown on a display.

Other disclosed embodiments provide a method for adjusting perspective views using adaptive image warping performed by at least one processor. The method comprises: receiving an overview video stream from a camera in a videoconferencing system; determining, based on analysis of at least one test frame from the overview video stream, at least one region of interest represented within the at least one test frame; determining one or more indicators of actual camera perspective relative to the at least one region of interest; determining a target camera perspective relative to the at least one region of interest, wherein the target camera perspective is different from the actual camera perspective; determining at least one image transformation based on a difference between the actual camera perspective and the target camera perspective; applying the at least one image transformation to one or more subframe regions of a plurality of image frames of the overview stream to generate at least one image warped primary video stream; and causing the at least one image warped primary video stream to be shown on a display

Other disclosed embodiments provide one or more computer readable media storing instructions that, when executed by at least one processor, cause the at least one processor to perform the method.

### BRIEF DESCRIPTION OF THE DRAWINGS

The accompanying drawings, which are incorporated in and constitute a part of this specification, illustrate disclosed embodiments and, together with the description, serve to explain the disclosed embodiments. The particulars shown are by way of example and for purposes of illustrative discussion of embodiments of the present disclosure. The description taken with the drawings makes apparent to those skilled in the art how embodiments of the present disclosure may be practiced.
FIG. 1 is a diagrammatic representation of an example of a multi-camera system, consistent with some embodiments of the present disclosure.
FIG. 2 is a diagrammatic representation of a camera including a video processing unit, consistent with some embodiments of the present disclosure.
FIG. 3 is an example illustration of perspective correction of an image or video stream, consistent with some embodiments of the present disclosure.
FIG. 4 represents process flow in an image warping system, consistent with some embodiments of the present disclosure.
FIG. 5 is a flowchart illustrating an example method of automatic framing, consistent with some embodiments of the present disclosure.
FIG. 6 is a flowchart illustrating an example method of constructing a perspective frame fit, consistent with some embodiments of the present disclosure.
FIG. 7 is a flowchart illustrating an example dewarping technique, according to exemplary disclosed embodiments.
FIG. 8 is a flowchart illustrating an example method of mesh generation, consistent with some embodiments of the present disclosure.
FIG. 9 illustrates an example of warped image sub-frames of a primary output video stream, consistent with some embodiments of the present disclosure.

### DETAILED DESCRIPTION

The present disclosure provides video conferencing systems and camera systems for use in video conferencing. Thus, where a camera system is referred to herein, it should be understood that this may alternatively be referred to as a video conferencing system, a video conferencing camera system, or a camera system for video conferencing. As used herein, the term "video conferencing system" refers to a system, such as a video conferencing camera, that may be used for video conferencing, and may be alternatively referred to as a system for video conferencing. The video conferencing system need not be capable of providing video conferencing capabilities on its own, and may interface with other devices or systems, such as a laptop, PC, or other network-enabled device, to provide video conferencing capabilities.

Video conferencing systems/camera systems in accordance with the present disclosure may comprise at least one camera and a video processor for processing video output generated by the at least one camera. The video processor may comprise one or more video processing units.

In accordance with embodiments of the present disclosure, a video conferencing camera may include at least one video processing unit. The at least one video processing unit may be configured to process the video output generated by the video conferencing camera. As used herein, a video processing unit may include any electronic circuitry designed to read, manipulate, and/or alter computer-readable memory to create, generate, or process video images and video frames intended for output (in, for example, a video output or video feed) to a display device. A video processing unit may include one or more microprocessors or other logic-based devices configured to receive digital signals representative of acquired images. The disclosed video processing unit may include application-specific integrated circuits (ASICs), microprocessor units, or any other suitable structures for analyzing acquired images, selectively framing subjects based on analysis of acquired images, generating output video streams, etc.

In some cases, the at least one video processing unit may be located within a single camera. In other words, the video conferencing camera may comprise the video processing unit. In other embodiments, the at least one video processing unit may be located remotely from the camera or may be distributed among multiple cameras and/or devices. For example, the at least one video processing unit may comprise more than one, or a plurality of, video processing units that are distributed among a group of electronic devices including one or more cameras (e.g., a multi-camera system), personal computers, a mobile device (e.g., tablet, phone, etc.), and/or one or more cloud-based servers. As another example, the at least one video processing unit may be located on a central video computing unit connected to a camera system or on a cloud computing platform, both being located remote from the at least one camera. Therefore, disclosed herein are video conferencing systems comprising at least one camera and at least one video processing unit, as described herein. The at least one video processing unit may or may not be implemented as part of the at least one camera. The at least one video processing unit may be configured to receive video output generated by the one or more video conferencing cameras. The at least one video processing unit may decode digital signals to display a video and/or may store image data in a memory device. In some embodiments, a video processing unit may include a graphics processing unit. It should be understood that where a video processing unit is referred to herein in the singular, more than one video processing units is also contemplated. The various video processing steps described herein may be performed by the at least one video processing unit, and the at least one video processing unit may therefore be configured to perform a method as described herein, for example a video processing method, or any of the steps of such a method. Where a determination of a parameter, value, or quantity is disclosed herein in relation to such a method, it should be understood that the at least one video processing unit may perform the determination and may therefore be configured to perform the determination.

Single camera and multi-camera systems are described herein. Although some features may be described with respect to single cameras and other features may be described with respect to multi-camera systems, it is to be understood that any and all of the features, embodiments, and elements herein may pertain to or be implemented in both single camera and multi-camera systems. For example, some features, embodiments, and elements may be described as pertaining to single camera systems. It is to be understood that those features, embodiments, and elements may pertain to and/or be implemented in multi-camera systems. Furthermore, other features, embodiments, and elements may be described as pertaining to multi-camera systems. It is also to be understood that those features, embodiments, and elements may pertain to and/or be implemented in single camera systems.

Embodiments of the present disclosure include multi-camera systems. As used herein, multi-camera systems may include two or more cameras that are employed in an environment, such as a meeting environment, and that can simultaneously record or broadcast one or more representations of the environment. The disclosed cameras may include any device including one or more light-sensitive sensors configured to capture a stream of image frames. Examples of cameras may include, but are not limited to, Huddly^{®} L1 or S1 cameras, Huddly^{®} IQ cameras, digital cameras, smart phone cameras, compact cameras, digital single-lens reflex (DSLR) video cameras, mirrorless cameras, action (adventure) cameras, 360-degree cameras, medium format cameras, webcams, or any other device for recording visual images and generating corresponding video signals.

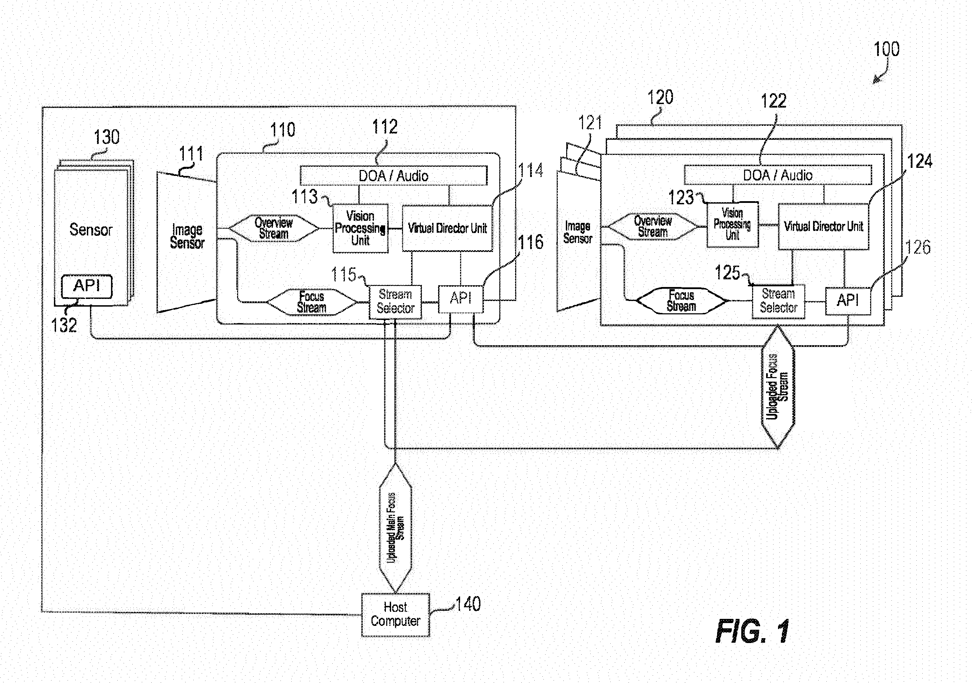

Referring to FIG. 1, a diagrammatic representation of an example of a multi-camera system 100, consistent with some embodiments of the present disclosure, is provided. Multi-camera system 100 may include a main camera 110, one or more peripheral cameras 120, one or more sensors 130, and a host computer 140. In some embodiments, main camera 110 and one or more peripheral cameras 120 may be of the same camera type such as, but not limited to, the examples of cameras discussed above. Furthermore, in some embodiments, main camera 110 and one or more peripheral cameras 120 may be interchangeable, such that main camera 110 and the one or more peripheral cameras 120 may be located together in a meeting environment, and any of the cameras may be selected to serve as a main camera. Such selection may be based on various factors such as, but not limited to, the location of a speaker, the layout of the meeting environment, a location of an auxiliary item (e.g., whiteboard, presentation screen, television), etc. In some cases, the main camera and the peripheral cameras may operate in a supervisor-worker arrangement. For example, the main camera may include most or all of the components used for video processing associated with the multiple outputs of the various cameras included in the multi-camera system. In other cases, the system may include a more distributed arrangement in which video processing components (and tasks) are more equally distributed across the various cameras of the multi-camera system. Further, in some embodiments, the video processing components may be located remotely relative to the various cameras of the multi-camera system such as on an adapter, computer, or server/network.

As shown in FIG. 1, main camera 110 and one or more peripheral cameras 120 may each include an image sensor 111, 121. Furthermore, main camera 110 and one or more peripheral cameras 120 may include a directional audio (DOA/Audio) unit 112, 122. DOA/Audio unit 112, 122 may detect and/or record audio signals and determine a direction that one or more audio signals originate from. In some embodiments, DOA/Audio unit 112, 122 may determine, or be used to determine, the direction of a speaker in a meeting environment. For example, DOA/Audio unit 112, 122 may include a microphone array that may detect audio signals from different locations relative to main camera 110 and/or one or more peripheral cameras 120. DOA/Audio unit 112, 122 may use the audio signals from different microphones and determine the angle and/or location that an audio signal (e.g., a voice) originates from. Additionally, or alternatively, in some embodiments, DOA/Audio unit 112, 122 may distinguish between situations in a meeting environment where a meeting participant is speaking, and other situations in a meeting environment where there is silence. In some embodiments, the determination of a direction that one or more audio signals originate from and/or the distinguishing between different situations in a meeting environment may be determined by a unit other than DOA/Audio unit 112, 122, such as one or more sensors 130.

Main camera 110 and one or more peripheral cameras 120 may include a vision processing unit 113, 123. Vision processing unit 113, 123 may include one or more hardware accelerated programmable convolutional neural networks with pretrained weights that can detect different properties from video and/or audio. For example, in some embodiments, vision processing unit 113, 123 may use vision pipeline models (e.g., machine learning models) to determine the location of meeting participants in a meeting environment based on the representations of the meeting participants in an overview stream. As used herein, an overview stream may include a video recording of a meeting environment at the standard zoom and perspective of the camera used to capture the recording, or at the most zoomed out perspective of the camera. In other words, the overview shot or stream may include the maximum field of view of the camera. Alternatively, an overview shot may be a zoomed or cropped portion of the full video output of the camera, but may still capture an overview shot of the meeting environment. In general, an overview shot or overview video stream may capture an overview of the meeting environment, and may be framed to feature, for example, representations of all or substantially all of the meeting participants within the field of view of the camera, or present in the meeting environment and detected or identified by the system, e.g. by the video processing unit(s) based on analysis of the camera output. A primary, or focus stream may include a focused, enhanced, or zoomed in, recording of the meeting environment. In some embodiments, the primary or focus stream may be a sub-stream of the overview stream. As used herein, a sub-stream may pertain to a video recording that captures a portion, or sub-frame, of an overview stream. Furthermore, in some embodiments, vision processing unit 113, 123 may be trained to be not biased on various parameters including, but not limited to, gender, age, race, scene, light, and size, allowing for a robust meeting or videoconferencing experience.

As shown in FIG. 1, main camera 110 and one or more peripheral cameras 120 may include virtual director unit 114, 124. In some embodiments, virtual director unit 114, 124 may control a main video stream that may be consumed by a connected host computer 140. In some embodiments, host computer 140 may include one or more of a television, a laptop, a mobile device, or projector, or any other computing system. Virtual director unit 114, 124 may include a software component that may use input from vision processing unit 113, 123 and determine the video output stream, and from which camera (e.g., of main camera 110 and one or more peripheral cameras 120), to stream to host computer 140. Virtual director unit 114, 124 may create an automated experience that may resemble that of a television talk show production or interactive video experience. In some embodiments, virtual director unit 114, 124 may frame representations of each meeting participant in a meeting environment. For example, virtual director unit 114, 124 may determine that a camera (e.g., of main camera 110 and/or one or more peripheral cameras 120) may provide an ideal frame, or shot, of a meeting participant in the meeting environment. The ideal frame, or shot, may be determined by a variety of factors including, but not limited to, the angle of each camera in relation to a meeting participant, the location of the meeting participant, the level of participation of the meeting participant, or other properties associated with the meeting participant. More non-limiting examples of properties associated with the meeting participant that may be used to determine the ideal frame, or shot, of the meeting participant may include: whether the meeting participant is speaking, the duration of time the meeting participant has spoken, the direction of gaze of the meeting participant, the percent that the meeting participant is visible in the frame, the reactions and body language of the meeting participant, or other meeting participants that may be visible in the frame.

Multi-camera system 100 may include one or more sensors 130. Sensors 130 may include one or more smart sensors. As used herein, a smart sensor may include a device that receives input from the physical environment and uses built-in or associated computing resources to perform predefined functions upon detection of specific input, and process data before transmitting the data to another unit. In some embodiments, one or more sensors 130 may transmit data to main camera 110 and/or one or more peripheral cameras 120, or to the at least one video processing units. Non-limiting examples of sensors may include level sensors, electric current sensors, humidity sensors, pressure sensors, temperature sensors, proximity sensors, heat sensors, flow sensors, fluid velocity sensors, and infrared sensors. Furthermore, non-limiting examples of smart sensors may include touchpads, microphones, smartphones, GPS trackers, echolocation sensors, thermometers, humidity sensors, and biometric sensors. Furthermore, in some embodiments, one or more sensors 130 may be placed throughout the meeting environment. Additionally, or alternatively, the sensors of one or more sensors 130 may be the same type of sensor, or different types of sensors. In other cases, sensors 130 may generate and transmit raw signal output(s) to one or more processing units, which may be located on main camera 110 or distributed among two or more cameras including in the multi-camera system. Processing units may receive the raw signal output(s), process the received signals, and use the processed signals in providing various features of the multi-camera system (such features being discussed in more detail below).

As shown in FIG. 1, one or more sensors 130 may include an application programming interface (API) 132. Furthermore, as also shown in FIG. 1, main camera 110 and one or more peripheral cameras 120 may include APIs 116, 126. As used herein, an API may pertain to a set of defined rules that may enable different applications, computer programs, or units to communicate with each other. For example, API 132 of one or more sensors 130, API 116 of main camera 110, and API 126 of one or more peripheral cameras 120 may be connected to each other, as shown in FIG. 1, and allow one or more sensors 130, main camera 110, and one or more peripheral cameras 120 to communicate with each other. It is contemplated that APIs 116, 126, 132 may be connected in any suitable manner such as-but not limited to-via Ethernet, local area network (LAN), wired, or wireless networks. It is further contemplated that each sensor of one or more sensors 130 and each camera of one or more peripheral cameras 120 may include an API. In some embodiments, host computer 140 may be connected to main camera 110 via API 116, which may allow for communication between host computer 140 and main camera 110.

Main camera 110 and one or more peripheral cameras 120 may include a stream selector 115, 125. Stream selector 115, 125 may receive an overview stream and a focus stream of main camera 110 and/or one or more peripheral cameras 120 and provide an updated focus stream (based on the overview stream or the focus stream, for example) to host computer 140. The selection of the stream to display to host computer 140 may be performed by virtual director unit 114, 124. In some embodiments, the selection of the stream to display to host computer 140 may be performed by host computer 140. In other embodiments, the selection of the stream to display to host computer 140 may be determined by a user input received via host computer 140, where the user may be a meeting participant.

In some embodiments, an autonomous video conferencing (AVC) system is provided. The AVC system may include any or all of the features described above with respect to multi-camera system 100, in any combination. Furthermore, in some embodiments, one or more peripheral cameras and smart sensors of the AVC system may be placed in a separate video conferencing space (or meeting environment) as a secondary space for a video conference (or meeting). These peripheral cameras and smart sensors may be networked with the main camera and adapted to provide image and non-image input from the secondary space to the main camera. In some embodiments, the AVC system may be adapted to produce an automated television studio production for a combined video conferencing space based on input from cameras and smart sensors in both spaces.

In some embodiments, the AVC system may include a smart camera adapted with different degrees of field of view. For example, in a small video conference (or meeting) space with fewer smart cameras, the smart cameras may have a wide field of view (e.g., approximately 150 degrees). As another example, in a large video conference (or meeting) space with more smart cameras, the smart cameras may have a narrow field of view (e.g., approximately 90 degrees). In some embodiments, the AVC system may be equipped with smart cameras with various degrees of field of view, allowing optimal coverage for a video conferencing space.

Furthermore, in some embodiments, at least one image sensor of the AVC system may be adapted to zoom up to 10X, enabling close-up images of objects at a far end of a video conferencing space. Additionally, or alternatively, in some embodiments, at least one smart camera in the AVC system may be adapted to capture content on or about an object that may be a non-person item within the video conferencing space (or meeting environment). Non-limiting examples of non-person items include a whiteboard, a television (TV) display, a poster, or a demonstration bench. Cameras adapted to capture content on or about the object may be smaller and placed differently from other smart cameras in an AVC system, and may be mounted to, for example, a ceiling to provide effective coverage of the target content.

At least one audio device in a smart camera of an AVC system (e.g., a DOA audio device) may include a microphone array adapted to output audio signals representative of sound originating from different locations and/or directions around the smart camera. Signals from different microphones may allow the smart camera to determine a direction of audio (DOA) associated with audio signals and discern, for example, if there is silence in a particular location or direction. Such information may be made available to a vision pipeline and virtual director included in the AVC system. Thus, in some embodiments, machine learning models as disclosed herein may include an audio model that provides both direction of audio (DOA) and voice activity detection (VAD) associated with audio signals received from, for example, a microphone array, to provide information about when someone speaks. In some embodiments, a computational device with high computing power may be connected to the AVC system through an Ethernet switch. The computational device may be adapted to provide additional computing power to the AVC system. In some embodiments, the computational device may include one or more high performance CPUs and GPUs and may run parts of a vision pipeline for a main camera and any designated peripheral cameras.

In some embodiments, by placing multiple wide field of view single lens cameras that collaborate to frame meeting participants in a meeting environment as the meeting participants engage and participate in the conversation from different camera angles and zoom levels, the multi-system camera may create a varied, flexible, and interesting experience. This may give far end participants (e.g., participants located further from cameras, participants attending remotely or via video conference) a natural feeling of what is happening in the meeting environment.

Disclosed embodiments may include a multi-camera system comprising a plurality of cameras. Each camera may be configured to generate a video output stream representative of a meeting environment. Each video output stream may feature one or more meeting participants present in the meeting environment. In this context, "featured" means that the video output stream includes or features representations of the one or more meeting participants. For example, a first representation of a meeting participant may be included in a first video output stream from a first camera included in the plurality of cameras, and a second representation of a meeting participant may be included in a second video output stream from a second camera included in the plurality of cameras. As used herein, a meeting environment may pertain to any space where there is a gathering of people interacting with one another. Non-limiting examples of a meeting environment may include a board room, classroom, lecture hall, videoconference space, or office space. As used herein, a representation of a meeting participant may pertain to an image, video, or other visual rendering of a meeting participant that may be captured, recorded, and/or displayed to, for example, a display unit. A video output stream, or a video stream, may pertain to a media component (may include visual and/or audio rendering) that may be delivered to, for example, a display unit via wired or wireless connection and played back in real time. Non-limiting examples of a display unit may include a computer, tablet, television, mobile device, projector, projector screen, or any other device that may display, or show, an image, video, or other rendering of a meeting environment.

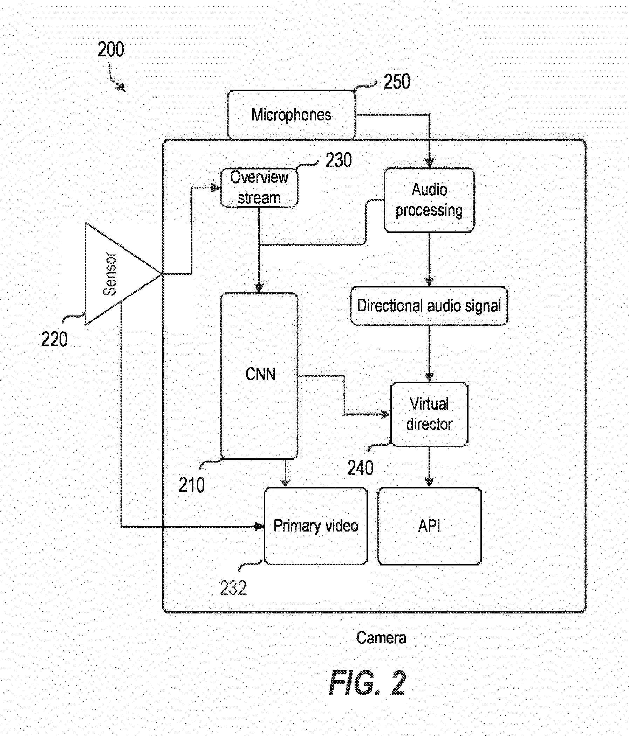

FIG. 2 is a diagrammatic representation of a camera 200 including a video processing unit 210. As shown in FIG. 10, video processing unit 210 (which may include one or more trained neural networks (e.g., convolutional neural networks, CNNs) may process the video data from a sensor 220. Video processing unit 210 may, in some examples, include similar features and provide similar functionality as the vision processing units 113, 123 described above relative to Fig. 1.

Video processing unit 210 may receive an overview video stream 230 and, based on analysis of the overview video stream, may cause a primary video stream 232 to be generated. In some examples, the primary video stream may include a cropped and zoomed video stream based on a portion of the frames included in the overview video stream. In other examples, as discussed in the sections below, the primary video stream 232 may include a plurality of image warped subframes of the overview video stream for which one or more image transformations have been applied such that the primary video stream appears to have been captured from a camera perspective different from a camera perspective associated with the overview video stream. Using specialized hardware and software, the camera 200 may detect the location of meeting participants using a wide-angle lens (not shown) and/or high-resolution sensor, such as sensor 220. Furthermore, in some embodiments, camera 200 may determine-based on head direction(s) of meeting participants-who is speaking, detect facial expressions, and determine where attention is centered based on head direction(s). This information may be transmitted to a virtual director 240, and the virtual director 240 may determine an appropriate video settings selection for video stream output(s).

In videoconference settings, one or more cameras may be positioned relative to a meeting space (e.g., a home office, conference room, board room, classroom, or any space from which an image may be acquired representative of a meeting participant). In limited cases, a videoconference camera may be positioned in a meeting space such that a meeting participant appears in the center of the camera's field of view. In such a case, a primary meeting participant's gaze relative to the camera may suggest to other meeting participants (or other receivers of an image stream including one or more images including a representation of the primary meeting participant) that the primary meeting participant is looking directly into the lens of the camera with a relatively level gaze. In other words, a central optical axis of the capturing camera may be substantially normal to a central point associated with the primary meeting participant (e.g., normal to a center point of the participant's face, neck, torso, etc.).

More commonly, however, a camera of a videoconference system will be positioned in a meeting space such that the central optical axis of the camera is not normal to a central point of a meeting participant. For example, cameras are often positioned at an elevation in a meeting space (e.g., on a top or bottom of a display, computer monitor, on a tabletop, etc.) at which the camera may be tilted up or downward with a non-zero tilt angle in order to capture images of meeting participants. Similarly, cameras may be positioned in a meeting space relative to meeting participants such that the center of the camera's field of view is offset from a central point associated with a meeting participant by a positive or negative pan angle.

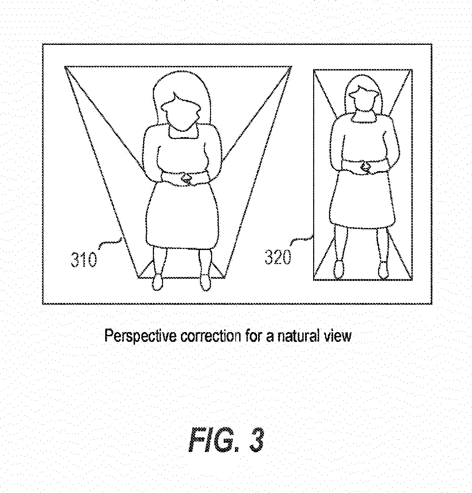

As a result of such off-axis camera perspectives, at least some amount of distortion of an image representation of a meeting participant within an acquired image frame (e.g., in the overview video stream) typically will exist for all camera perspectives other than the straight-on example, where the camera's optical axis is substantially normal to a central point of a meeting participant. For example, Fig. 3 illustrates a first example where a captured image 310 is acquired from a camera position that is elevated relative to the meeting participant. As a result of the elevated camera perspective, distortion may occur such that features nearer to the camera (e.g., the participant's head and face) appear proportionately larger than features of the meeting participant that are further from the camera (e.g., the participant's feet).

In contrast, image 320 shown in Fig. 3, does not include the same distortion as exhibited in image 310. Rather, image 320 appears to have been captured from a camera perspective, such as an on-axis camera perspective where the camera's central optical axis substantially aligns with a normal to a central location associated with the meeting participant. In one example, image 320, without the same distortion exhibited by image 310, may be generated by placing the videoconference camera at an on-axis perspective position relative to the meeting participant.

In other cases, however, which will be described in more detail in the sections below, image 320 may be generated by image warping an image acquired from an off-axis camera perspective position relative to a meeting participant. The image warping may be result in an image-warped image that has fewer or no distortions associated with the original off-axis camera perspective. In such an example, an acquired image, such as image 310, which exhibits distortions associated with an off-axis camera perspective (e.g., where the central optical axis of the camera is tilted downward toward a central location of the meeting participant, such as a center of the participant's face, center of the neck, center of the torso, etc.), may be image warped to appear as image 320. Such image warping may be accomplished by determining a difference between an actual camera perspective (e.g., the downward tilt angle of the camera in the image 310 example) and a target camera perspective (e.g., an on-axis camera perspective). With this difference determined, an image transformation can be determined that, when applied to the acquired image (e.g., image 310), the transformed, image-warped image (e.g., image 320) will appear as though it was acquired at the target image perspective rather than from the actual camera perspective.

Other videoconference systems have included an ability to highlight certain meeting participants represented in a wide-angle camera view. For example, some systems may offer the ability to zoom in on an individual (e.g., a speaker) to highlight that individual in a video stream shown on a display. Such automatic framing models, however, typically offer nothing more than simple crop and zoom functionality. As a result, the cropped and zoomed image will include distortions the same as or like those that were present in the original wide-angle image frames. For example, one drawback of such an approach is that the cropping and scaling, while conceptually simple, will leave unnecessary rectilinear distortions (like straight lines appearing curved) or perspective distortions (like volume deformation) that are present in the main image. This is a known tradeoff in the field of panorama photography. If the field of view of the image is large, the rendering will have to balance these distortions against each other.

Earlier videoconference camera models also lack the ability to make changes in the acquired images to change perceived camera perspective relative to the acquired images. That is, such systems do not offer the ability to image warp a segment of a captured image to change an effective camera perspective relative to the featured segment of the captured image (e.g., image warping image 310 to provide an image 320 having a perceived camera perspective (e.g., a target camera perspective) different from an actual camera perspective associated with acquired sensor image 310).

Such features in a videoconference system may offer certain benefits. For example, the features described herein are aimed at enhancing the overall meeting experience and may also contribute to improved efficiency of communication and collaboration. The presently disclosed embodiments may assist in reducing distortion. In some meeting room setups, wide-angle or fisheye lenses may be used to capture a larger field of view. Any such lens will distort the image in some way, for instance making people appear stretched or straight lines look curved. Image warping can adaptively correct this distortion, making the video feed more natural and visually appealing, which can be especially important for professional presentations and client meetings.

Viewing angles may be improved or optimized. Meeting rooms come in various sizes and shapes, and not all participants may be seated directly in front of the camera. Image warping allows the camera to adjust its view and perspective angle to ensure that all participants are visible on the screen, even if they are not sitting in the camera's direct line of sight. This improves inclusivity and helps ensure that everyone's contributions are visible during the meeting.

Additionally, image warping according to the disclosed techniques can dynamically adapt to the meeting room's layout. For example, if a meeting room is being used for a certain purpose, such as a presentation or training session, camera settings, including effective camera perspective, can be adjusted (automatically or based on user input) to focus on the presenter or the whiteboard, ensuring that the content being discussed is clear and visible to remote participants.

Image warping according to the disclosed embodiments may also allow for more efficient use of available meeting space. Some meeting rooms have limited space for camera placement. Image warping can increase or maximize the use of this space by capturing a broader field of view and presenting it in standard screen aspect ratios without unnecessary cropping or distortion.

The disclosed image warping techniques may enhance user experience by, e.g., ensuring remote meeting participants have a clear, undistorted view of the room and its occupants. When participants can see each other clearly and interact effectively, it enhances engagement, understanding, and collaboration. Compared to a static view angle, adaptive view angles (e.g., effective camera perspectives that change over time relative to one or more meeting participants) can create more variation in the video. This may contribute to reducing meeting fatigue. The disclosed techniques may also offer a visually appealing and well-composed video feed that can enhance an organization's professionalism and brand image; e.g., demonstrating a commitment to quality in communication and collaboration.

The disclosed systems may simplify setup complexity. For example, image warping can eliminate the need for physically moving or adjusting cameras every time the room layout changes or new participants enter the meeting. This saves time and effort, making meetings more efficient. Additionally, cost savings may be realized. Rather than investing in multiple cameras or expensive motorized camera systems for different room configurations, image warping can achieve similar or better results with even a single camera, potentially saving on equipment costs.

Returning to the implementation, the disclosed embodiments may accomplish the described image warping of subframe regions of image frames of an overview video stream using various techniques. In one example, the disclosed embodiments may use a projection model to create a dynamic image-warping mesh, giving new synthetic views and projections, different from the projection of the optical lens used to capture the image. By relying on camera calibration methods that allow mapping pixels to spatial directions, it is possible with a model to create image warpings that emulate almost any camera geometric projection, as long as it is within the field of view of the original image. In other words, it enables variation in camera angle and type with a single fixed camera.

In addition to reducing undesired distortions, choosing the right projection adapted to scene content can improve the experience by balancing inevitable trade-offs in distortions and placing distortions where they are less likely to be noticed (distortion masking). Also, the concept allows transitioning between projections, for instance to give the appearance of physical camera motion.

The projection model can broadly be classified as nonparametric or parametric. Several types of parametric models may be used. Such models may relate to the physical surface the model emulates projection to, for example planar or cylindrical models. Within each parametric model, parameters can control aspects like plane orientation or cylinder curvature. It is also possible to combine two parametric models and blend between them. For example, a model could be planar in the central field of view and cylindrical in the peripheral field of view.

A non-parametric model on the other hand need not have physically interpretable parameters, but rather may include a multitude of similar model variables. Examples could include a spline or bezier curve describing the pixel displacement between the input and output image. This is a more direct way of constructing a warp mesh with high flexibility.

The adaptation of projection can be controlled by a projection control model. This model can either be engineered or generated through machine learning. The projection control model takes as input the features from computer vision models and auxiliary sensor signals. The machine vision features can detect objects in the scene, estimate distances to objects, infer face and body pose key points, determine face embeddings, or estimate geometry of room furniture layout, among various other potential tasks.

Various auxiliary sensor signal inputs may be used to determine camera orientation. In some cases, such sensors may include accelerometers, inertial measurement units (IMUs), directional microphones, and/or Lidar systems providing range information relative to various locations associated with meeting participants, various locations associated with a meeting space (e.g., room corners, etc.), and/or objects in a meeting environment. Other examples of such sensors include, but are not limited to, sensors 130 as shown and described with respect to FIG. 1.

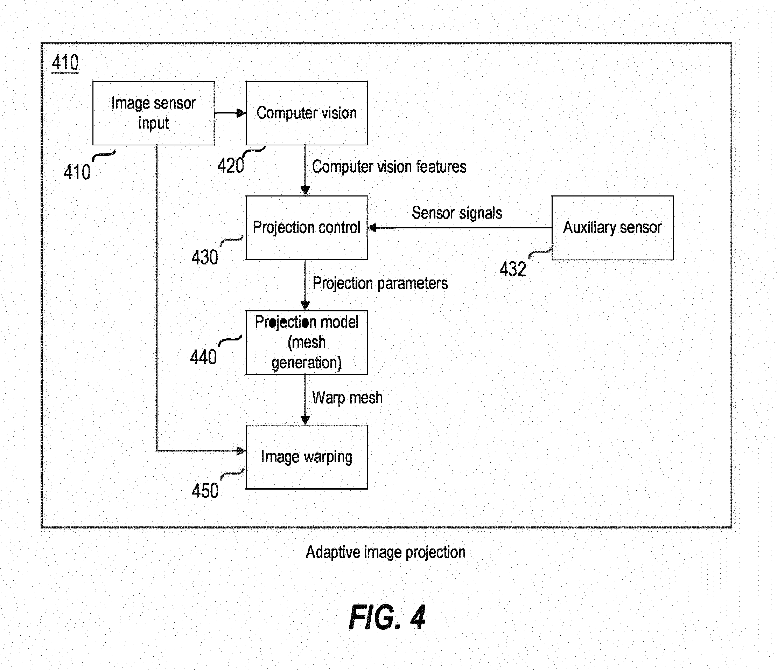

Fig. 4 provides a conceptual representation of the use of auxiliary sensor inputs in the disclosed adaptive image projection techniques. For example, as shown, a camera image sensor 410 in a videoconference system 410, may generate an initial input (e.g., an overview video stream including a plurality of acquired image frames). A computer vision module 420 (e.g., including one or more trained neural networks executed by a video processing unit, such as processing unit 113 or 123) may receive the overview video stream from image sensor 410. Based on analysis of at least one test frame, computer vision model 420 may determine, e.g., regions of the test frame including representations of meeting participants or other objects of interest. Such regions of interest may be extracted from frames of the overview video stream and featured in one or more primary video streams, which may be modified using the disclosed image warping techniques.

System 410 may also include a projection control module 430 executed, e.g., by processing unit 113 or 123. Projection control module may receive input from an auxiliary sensor 432 (e.g., an accelerometer, directional microphone, Lidar, etc.) indicative of an orientation of a camera including image sensor 410. In some cases, projection control unit 430 may determine the orientation and/or actual perspective of the camera used to acquire the overview video stream based on the auxiliary sensor input. In other cases, projection control unit 430 may include one or more trained models configured to receive a test image frame or sub-frame as input and output one or more parameter values indicative of an actual perspective/orientation of the camera.

With the actual camera orientation/perspective information, a projection model 440 (e.g., also executed by processing unit 113 or 123) may be used to determine one or more image transformations to convert image frames or image sub-frames generated using image sensor 410 from an actual perspective to a target perspective (e.g., an on-axis perspective as described above). In some examples, the one or more image transformations may include a warp mesh that provides pixel-by-pixel transformation information to warp an acquired image frame or subframe such that the image frame or subframe appears to have been acquired from the target camera perspective rather than the actual camera perspective.

The image transformation(s) generated by projection model 440 may be implemented by image warping unit 450 (e.g., executed by processing unit 113 or 123). As shown in Fig. 4, image warping unit 450 may operate directly upon frames or sub-frames of the overview video stream, especially as indicated or guided by computer vision model 420.

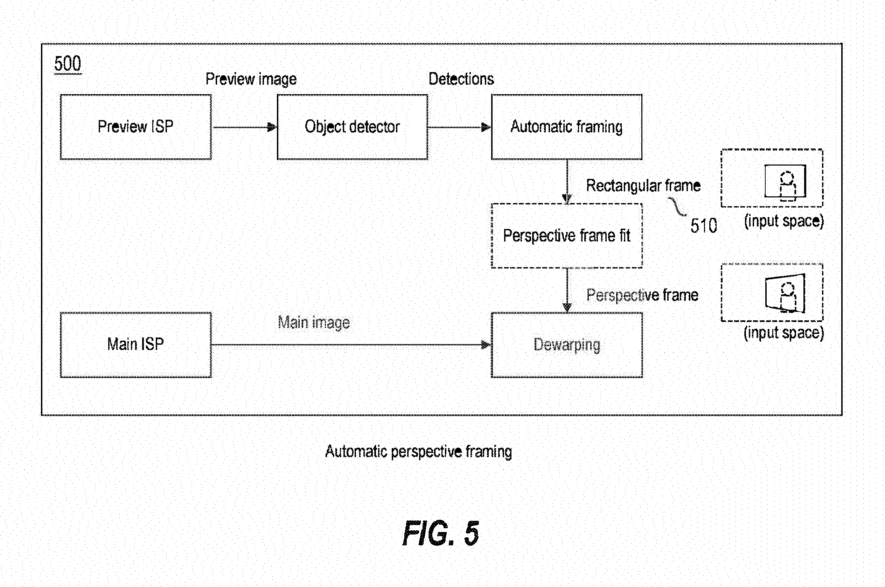

Fig. 5 shows another implementation of an adaptive image warping system 500, where an automatic framing model is extended to provide the projection control model of Fig. 4, by including a perspective frame fit stage. The automatic framing model produces a framing based on input from an object detector model, e.g., in addition to other machine vision models providing features such as facial feature keypoints or embeddings. The framing model may also receive additional inputs based on other modalities like audio signal analysis from microphone inputs. The object detector or machine vision models receive input in the form of an overview image, which can be an image sensor image processed by a suitable image signal processing (ISP) device. This may be referred to as a preview image.

In this example embodiment, the output from the automatic framing is a rectangular frame 510 in some input coordinate space, for instance image pixel coordinates for the preview image or calibrated normalized camera coordinates. Here and in other disclosed embodiments, the disclosed automatic framing models are configured to include/generate perspective changes relative to the actual perspective associated with acquired image frames.

Thus, rather than simply cropping and scaling the acquired image sensor image, or the sensor image processed by an image signal processor (ISP) (which, as described above leaves rectilinear distortions (like straight lines appearing curved) or perspective distortions (like volume deformation) that are present in main the image), the disclosed embodiments apply image warping techniques to vary the perceived perspective of the warped images relative to the image sensor acquired images.

The disclosed embodiments may fit a perspective transform and frame in a separate step, taking the rectangular frame as input. The perspective frame boundary may be adapted to approximate the field of view of the rectangular frame, placing the center of perspective close to the center of the frame or object of interest. By adapting the perspective in this way, the distortion associated with cropping a wide-angle image may be eliminated. The output from the perspective frame fit step may be used in an image warping step, taking one or more overview video image frames as input.

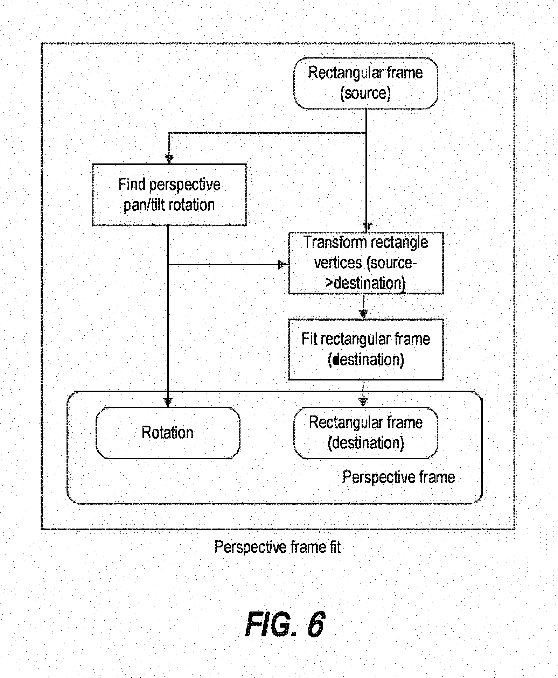

Fig. 6 represents an example of a perspective frame fit. A rotation is first determined, based on the rectangular input frame and optionally where the center of perspective should be located, with a reasonable default as the center of the rectangular input frame. To determine the rotation, it may be useful to first convert the coordinates of the input rectangle to normalized camera coordinates, unless they are already in that form. The vertices of the input rectangle can then be transformed to the new perspective using a rotation matrix. The vertices of the input rectangle can for instance be corners and midpoints, or a denser sampling of points. A new rectangle can then be fit to the transformed vertices, and finally, a data structure with the rotation and fit rectangle can be constructed - e.g., a target perspective frame.

The pan and tilt rotation determined in the perspective frame fit can also be based on the measured camera orientation received from the auxiliary sensor. For instance, the tilt axis can be determined from the measured tilt angle in such a way that the resulting image after image warping will be level, with vertical features appearing parallel.

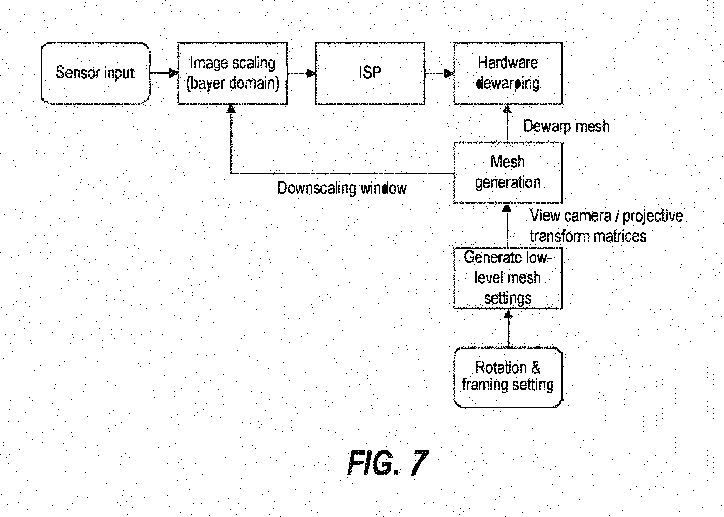

The perspective frame may also be used to guide image scaling and cropping in the main ISP step, or guiding an image scaling and cropping step before the main image signal processor step, to provide the image warping step with a desired level of resolution. Fig. 7 shows one possible implementation of the image warping step which also includes use of such a guide relative to the image scaling.

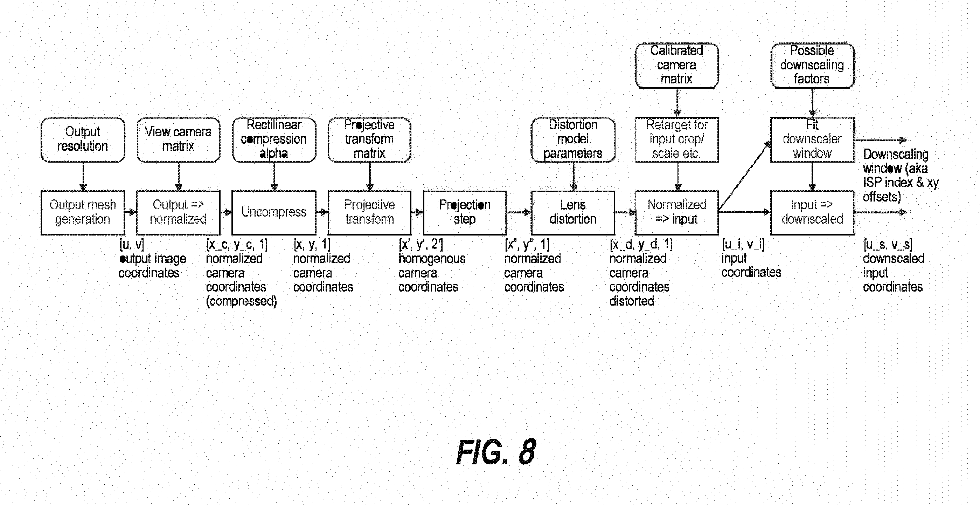

Fig. 8 shows a possible implementation of the mesh generation step. When including perspective in framing transitions, more variety and naturalness of motion can be created, compared to using rectangular frames.

### Example processing flow

In some embodiments, the disclosed systems may be configured to perform a series of steps to convert input image frames or sub-frames (e.g., from an overview video) into warped image frames that simulate capture from a target camera perspective different from an actual camera perspective used to capture the overview video stream. In some examples, a method performed by the disclosed embodiments may include: receiving from an image sensor, one or more video frames, by an image signal processor; determining, by the image signal processor one or more preview video frames based on the received images; storing the determined one or more preview video frames to memory; reading the stored one or more preview video frames from memory by a neural network processing unit; determining, using the neural network processing unit, one or more computer vision features (e.g., regions of interest in a captured image frame) representing the scene depicted in the one or more preview video frames; determining from the one or more computer vision features representing the scene, a polygonal region of interest in one or more of the preview video frames; reading from the memory camera model parameters for a camera model; determining by the camera model from the polygonal region of interest, the normalized camera coordinates of vertices of the polygonal region of interest; determining camera orientation (e.g., based on input from one or more auxiliary sensors); determining from the polygonal region of interest in normalized camera coordinates, and the camera orientation, one or more geometric projection parameters; determining by the camera model and one or more geometric projection parameters, a polygonal region of interest transformed to a new geometric projection; determining from the transformed polygonal region of interest, a rectangular region of interest approximating the polygonal region of interest; determining, by the image signal processor, a main video frame based on the received sensor video frames; storing the determined main video frame to memory; reading the stored main video frame from memory by an image warping unit; generating by the camera model, from geometric projection parameters and rectangular region of interest, a warp mesh relating pixel coordinates in an output video frame to pixel coordinates in the main video frame; applying the generated warp mesh in an image warping unit to produce pixels of an output video frame from pixels of the main video frame; and storing the produced main video frame to memory.

In the example process steps described above, the camera model parameters read from memory may be sufficient to convert pixel coordinates in one or more of the preview video frames to normalized camera coordinates according to the camera model. The camera model parameters may include a camera matrix and geometric distortion model coefficient vector sufficient to convert pixel coordinates in one or more of the preview video frames to normalized camera coordinates according to the camera model. Further, in the described steps, the normalized camera coordinates may be of a form that can be converted to azimuth-elevation angles relative to the camera body. The camera orientation received from the auxiliary sensor may include Euler angles for tilt and roll relative to a level orientation. The geometric projection parameters may include Euler angles for pan, tilt and roll describing a 3D rotation around the camera projection center. The determination of the Euler tilt angle is based on the camera orientation, so that the geometric projection, when used to generate a warp mesh and applied in the image warping unit, would level the image. The Euler tilt angle may further be limited to a maximum absolute value which will produce a high-quality output image in the image warping unit. The Euler angle may be clamped to zero if the determined angle is below a minimum absolute value that is defined by the expected accuracy of the measured camera orientation. The determination of the Euler roll angle may be based on the camera orientation, so that the geometric projection, when used to generate a warp mesh and applied in the image warping unit, would level the image. The Euler roll angle may be further limited to a maximum absolute value which will produce a high-quality output image in the image warping unit. The Euler roll angle may be clamped to zero if the determined angle is below a minimum absolute value that is defined by the expected accuracy of the measured camera orientation. The determination of the Euler pan angle may be based on the center point of the polygonal region of interest.

In the disclosed embodiments, the image warping unit may include a configurable resampling hardware accelerator in a system-on-chip (SoC), a programmable graphics processing unit (GPU), or a software component running on a general-purpose processor (CPU).

In the disclosed embodiments, the perspective frame fit stage does not have to be limited to the rectangular frame as input. For instance, it could be beneficial to share other information from the automatic framing step to guide the perspective frame fit, like the location of salient features that should not be cropped, and features outside of the current region of interest that should not be included. The perspective frame fit stage does not have to be limited to perspective transform and frame as its output, but can be generalized to include other projection model parameters, such as cylindrical projection curvature.

In other variants of the disclosed embodiments, the perspective frame may be adapted directly to machine vision model output, eliminating the intermediate rectangular frame output from automatic framing. Such a unitary projection control model may for instance include a neural network trained by machine learning. However, one advantage of retaining the intermediate step with rectangular frame output may include modularity and simpler integration with existing automatic framing implementations.

The disclosed embodiments, as noted above, are compatible with multi-camera setups. In some cases, a director component may be responsible for choosing between framings proposed by framing components running individual cameras.

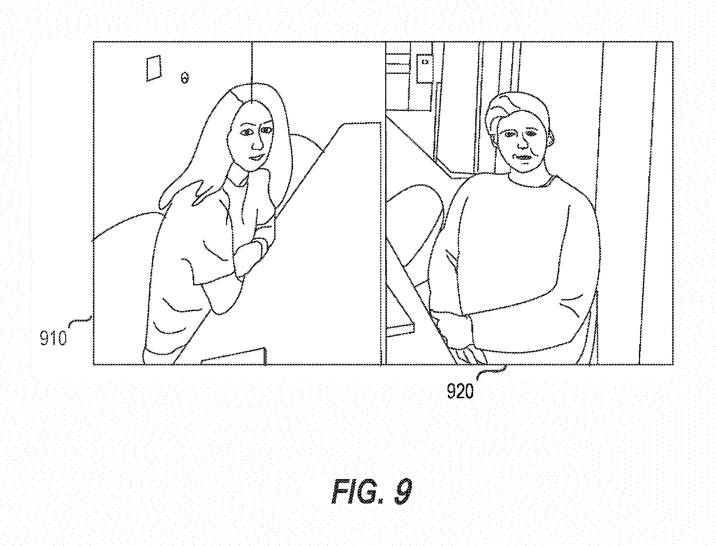

Fig. 9 show image sub-frames extracted from an overview video stream and image warped to change a perceived camera perspective from an actual perspective to a target perspective. In this example, the subjects are sitting across at a wide conference room table across from one another. The camera is located at an elevated position in the conference room with its central optical axis extending parallel to the longitudinal axis of the conference room table. This configuration results in an actual camera perspective relative to subject 910 that includes a -20 degree (downward) tilt angle and a -10 degree (leftward) pan angle. Similarly, this configuration results in an actual camera perspective relative to subject 920 that includes a -20 degree (downward) tilt angle and a +10 degree (rightward) pan angle. With this configuration, the representations of the respective subjects in the resulting image subframes include distortions that result from the off-axis camera perspective (and camera optics). Using the disclosed image warping techniques, however, the image sub-frames may be warped according to a target camera perspective such that some or all of the distortions in the originally captured sub-frames are reduced or eliminated.

### Additional Example Embodiments

The disclosed embodiments may include a videoconferencing system for adjusting perspective views using adaptive image warping. The videoconferencing system may include an image warping unit including at least one processor programmed to: receive an overview video stream from a camera in the videoconferencing system; determine, based on analysis of at least one test frame from the overview video stream, at least one region of interest represented within the at least one test frame; determine one or more indicators of actual camera perspective relative to the at least one region of interest; determine a target camera perspective relative to the at least one region of interest, wherein the target camera perspective is different from the actual camera perspective; determine at least one image transformation based on a difference between the actual camera perspective and the target camera perspective; apply the at least one image transformation to one or more subframe regions of a plurality of image frames of the overview stream to generate at least one image warped primary video stream; and cause the at least one image warped primary video stream to be shown on a display.

Various types of image segments in the test frame of the overview video stream may be identified (e.g., by a trained neural network) as including a representation of a region of interest in a meeting environment. Moreover, in some cases, multiple discrete regions of interest may be identified based on analysis of a single test frame. The determined region or regions of interest may be used in determining how sub-frames may be extracted from one or more of the full frames of the overview video stream for use in generating a primary video stream (e.g., focusing on an image representation of a meeting participant represented in a sub-frame region of the overview video frames). For example, once a region of interest in a meeting environment has been identified based on analysis of one or more test frames, image segments of the overview video including representations of the region(s) of interest may be used to generate the primary video stream.

In some cases, as noted, a region of interest of a meeting environment, as identified based on analysis of a test frame, e.g., may include a videoconference participant (e.g., a region where a meeting participant is sitting or standing). The at least one region of interest identified may also include a first region of interest including a first videoconference participant and at least a second region of interest including a second videoconference participant. In some cases, the at least one region of interest includes two or more videoconference participants (e.g., where two participants are sitting close to one another, such that the primary video stream is generated to include representations of more than one participant within a single frame of the primary video stream). Additionally, the at least one region of interest may be identified based on its inclusion of one or more objects (e.g., a lectern, podium, presentation screen, etc.).

The identified region of interest may be bounded by any suitable boundary indicator. In some cases, the at least one region of interest is delineated by a rectangular boundary within the at least one test frame. The at least one region of interest may also be delineated by a polygonal boundary within the at least one test frame. The polygonal boundary may be a quadrangle. In other cases, the at least one region of interest is delineated by a boundary in the at least one test frame that traces an outline of a perimeter associated with a representation of at least one videoconference participant.

The one or more indicators of actual camera perspective relative to the at least one region of interest may be expressed using any suitable convention. For example, in some cases, the one or more indicators of actual camera perspective relative to the at least one region of interest include coordinates, in a reference frame of the camera, of at least one point associated with a determined boundary delineating a representation of the at least one region of interest in the at least one test frame. The one or more indicators may also include coordinates, in a reference frame of the camera, of at least one point associated with an object or videoconference participant located in the at least one region of interest. Similarly, the one or more indicators may include coordinates, in a reference frame of the camera, for each of a plurality of pixels included in a representation of the at least one region of interest.

The one or more indicators of actual camera perspective relative to the at least one region of interest may be determined using various techniques. For example, the one or more indicators may be determined, at least in part, based on an output of a sensor (e.g., an auxiliary sensor) integrated with or separate from the camera. In some cases, the sensor includes an accelerometer or a directional microphone. In some examples, the one or more indicators of actual camera perspective relative to the at least one region of interest are determined, at least in part, based on a predetermined camera model, wherein the predetermined camera model indicates at least one of a field of view angle, a pitch value, a tilt value, a roll value, a yaw value, or a pan value associated with the camera.

A target camera perspective, different from the actual camera perspective used to acquire the overview video stream, may be determined in various ways. In some examples, the target camera perspective is determined to have opposite pan and/or tilt angles relative to the actual camera perspective. In some examples, the target camera perspective may be determined as the line of sight from the camera origin to a center point associated with an object or videoconference participant represented in the at least one test frame.

In still other cases, multiple different target camera perspectives may be determined, and the different target perspectives may be used as a basis for simulating a changing camera perspective relative to a meeting participant or region of interest. In such cases, the target camera perspective would include a plurality of different target camera perspectives, each associated with one or more corresponding image transformations. To provide the changing perspective effect in a generated primary video stream, the one or more corresponding image transformations may be applied to one or more subframe regions of at least one of the plurality of image frames of the overview video stream to generate at least one image warped primary video stream representing a changing camera perspective.

The simulated changes in camera perspective may occur at various different rates. For example, each of the one or more corresponding image transformations may be applied to a same number of frames from among the plurality of image frames of the overview video stream. Such an application may result in an effect where the perspective appears to change at a constant rate (e.g., linearly). In other cases, non-linear perspective change effects may be obtained by varying how the image transformations are applied. For example, each of the one or more corresponding image transformations may be applied to a linearly varying number of frames from among the plurality of image frames of the overview video stream. In this case, a perspective change effect may appear to accelerate, but at a constant acceleration rate. In other cases, each of the one or more corresponding image transformations may be applied to a nonlinearly varying number of frames from among the plurality of image frames of the overview video stream, such that an effect achieved is one in which changes in camera perspective appear to begin slowly (or quickly), but then accelerate (or decelerate) toward a final target camera perspective.

With the target camera perspective(s) determined, the at least one image transformation may be determined based on a difference between the actual camera perspective and the target camera perspective. The image transformation may, for example, be suitable to warp an original image segment acquired at an actual camera perspective to a corrected image segment that appears as if it was acquired from the target camera perspective. In some cases, the image transformation may indicate one or more image adjustments, on a pixel-by-pixel basis, dependent on a difference between a first camera pan angle associated with the actual camera perspective and a second camera pan angle associated with the target camera perspective. Further, the image transformation may indicate one or more image adjustments, on a pixel-by-pixel basis, dependent on a difference between a first camera tilt angle associated with the actual camera perspective and a second camera tilt angle associated with the target camera perspective.

To obtain a warped image simulating acquisition from the target camera perspective, the at least one image transformation may be applied to one or more subframe regions of a plurality of image frames of the overview stream to generate at least one image warped primary video stream. The application of the at least one image transformation may be accomplished using an image warp mesh (described above) indicating, for a plurality of pixel coordinates of the image warp mesh, one or more transformations to apply relative to pixel coordinates of the overview video stream.

With one or more image warped primary video streams generated, the primary video streams may be shown on a display. The display may include, among other examples, a conference room display, desktop computer display, laptop or mobile device display, etc. Alternatively or additionally, the image warped primary video stream(s) may be provided to a video conferencing platform for display as part of the video feed of the receiving platform.

Various analysis techniques described above may be accomplished using algorithmic image analysis. In some examples, however, one or more trained neural networks may be configured to perform one or more of the described tasks. For example, in some cases, the at least one processor (e.g., included in the video processing unit 113, 123) may be further programmed to provide at least one trained neural network configured to receive the at least one test frame and an indicator of the target camera perspective as inputs and, in response, output the at least one image transformation for generating the image warped primary video stream. Further, at least one trained neural network may be configured to receive the at least one test frame as an input, determine the at least one region of interest represented in the test frame, and output the one or more indicators of actual camera perspective. At least one trained neural network may be configured to receive the at least one test frame and an indicator of the target camera perspective as inputs, determine the at least one region of interest represented in the test frame, determine the one or more indicators of actual camera perspective, determine the at least one image transformation, and output the at least one image warped primary video stream. Or, at least one trained neural network may be configured to receive the at least one test frame as an input, determine the at least one region of interest represented in the test frame, determine the one or more indicators of actual camera perspective, determine the target camera perspective, determine the at least one image transformation, and output the at least one image warped primary video stream.

It should also be mentioned that guidance of one or more of the tasks described above may be based on input received from a user of the videoconference system. For example, a target camera perspective and/or a desired perspective change effect (e.g., constant rate change, non-linear rate change, etc.) may be determined based on input received from a user of the videoconferencing system.

Configurations of the disclosed videoconferencing systems may also be varied. For example, in some cases, the image warping unit (e.g., included as part of video processing unit 113, 123) may be located on the camera or at a position (or in a device) remotely located relative to the camera. Further, as noted, the disclosed videoconferencing systems may include a single camera or may include a plurality of cameras where the described output video stream is acquired using one of the cameras among a plurality of cameras. The image warping unit may be located outside the camera(s), for example on a USB (universal serial bus) device or a central computing device.

In accordance with the disclosure, the videoconferencing system may be configured to automatically adjust perspective views using adaptive image warping. For example, the videoconferencing system may be configured to adjust perspective views and/or correct image distortion automatically. The image warping unit may therefore be programmed or configured to perform its operations automatically. Additionally or alternatively, the videoconferencing system may be configured to adjust perspective views and/or correct image distortion in real time. Thus, the image warping unit may therefore be programmed or configured to perform its operations in real time.

Embodiments of the present disclosure may provide multi-camera videoconferencing systems or non-transitory computer readable media containing instructions for real-time image correction using adaptive image warping. Some embodiments may involve machine language vision/audio pipelines that can detect people, objects, speech, movement, posture, canvas enhancement, documents, and depth in a videoconferencing space. In some embodiments a virtual director unit (or component) may use the machine language vision/audio and previous events in the videoconference to determine particular portions of an image or video output (from one or more cameras) to place in a composite video stream. The virtual director unit (or component) may determine a particular layout for the composite video stream.

Although many of the disclosed embodiments are described in the context of a camera system, a video conferencing system or the like, it should be understood that the present disclosure specifically contemplates, in relation to all disclosed embodiments, corresponding methods. More specifically methods corresponding to the actions, steps or operations performed by the video processing unit(s), as described herein, are disclosed. Thus, the present disclosure discloses video processing methods performed by at least one video processing unit, including any or all of the steps or operations performed by a video processing unit as disclosed herein. Furthermore, disclosed herein is at least one (or one or more) video processing units. Thus, it is specifically contemplated that at least one video processing unit may be claimed in any configuration as disclosed herein. The video processing unit(s) may be defined separately and independently of the camera(s) or other hardware components of the video conferencing system. Also disclosed herein is one or more computer readable media storing instructions that, when executed by one or more video processing units, cause the one or more video processing units to perform a method in accordance with the present disclosure (e.g., any or all of the steps or operations performed by a video processing unit, as described herein).

Other embodiments will be apparent from consideration of the specification and practice of the embodiments disclosed herein. It is intended that the specification and examples be considered as example only, with a true scope and spirit of the disclosed embodiments being indicated by the following claims.

The following numbered clauses set out non-limiting aspects of the present disclosure:
1. A videoconferencing system for adjusting perspective views using adaptive image warping, the system comprising:
   an image warping unit including at least one processor programmed to:
   receive an overview video stream from a camera in the videoconferencing system;
   determine, based on analysis of at least one test frame from the overview video stream, at least one region of interest represented within the at least one test frame;
   determine one or more indicators of actual camera perspective relative to the at least one region of interest;
   determine a target camera perspective relative to the at least one region of interest, wherein the target camera perspective is different from the actual camera perspective;
   determine at least one image transformation based on a difference between the actual camera perspective and the target camera perspective;
   apply the at least one image transformation to one or more subframe regions of a plurality of image frames of the overview stream to generate at least one image warped primary video stream; and
   cause the at least one image warped primary video stream to be shown on a display.
2. The videoconferencing system of clause 1, wherein the at least one region of interest includes a videoconference participant.
3. The videoconferencing system of clause 1, wherein the at least one region of interest includes: a first region of interest including a first videoconference participant and at least a second region of interest including a second videoconference participant.
4. The videoconferencing system of clause 1, wherein the at least one region of interest includes two or more videoconference participants.
5. The videoconferencing system of clause 1, wherein the at least one region of interest includes one or more objects.
6. The videoconferencing system of clause 1, wherein the at least one region of interest represented with the at least one test frame is determined by a trained neural network.
7. The videoconferencing system of clause 1, wherein the at least one region of interest is delineated by a rectangular boundary within the at least one test frame.
8. The videoconferencing system of clause 1, wherein the at least one region of interest is delineated by a polygonal boundary within the at least one test frame.
9. The videoconferencing system of clause 8, wherein the polygonal boundary is a quadrangle.
10. The videoconferencing system of clause 1, wherein the at least one region of interest is delineated by a boundary in the at least one test frame that traces an outline of a perimeter associated with a representation of at least one videoconference participant.
11. The videoconferencing system of clause 1, wherein the one or more indicators of actual camera perspective relative to the at least one region of interest include coordinates, in a reference frame of the camera, of at least one point associated with a determined boundary delineating a representation of the at least one region of interest in the at least one test frame.
12. The videoconferencing system of clause 1, wherein the one or more indicators of actual camera perspective relative to the at least one region of interest include coordinates, in a reference frame of the camera, of at least one point associated with an object or videoconference participant located in the at least one region of interest.
13. The videoconferencing system of clause 1, wherein the one or more indicators of actual camera perspective relative to the at least one region of interest include coordinates, in a reference frame of the camera, for each of a plurality of pixels included in a representation of the at least one region of interest.
14. The videoconferencing system of clause 1, wherein the one or more indicators of actual camera perspective relative to the at least one region of interest are determined, at least in part, based on an output of a sensor separate from the camera.
15. The videoconferencing system of clause 14, wherein the sensor includes an accelerometer.
16. The videoconferencing system of clause 14, wherein the sensor includes a directional microphone.
17. The videoconferencing system of clause 1, wherein the one or more indicators of actual camera perspective relative to the at least one region of interest are determined, at least in part, based on a predetermined camera model.
18. The videoconferencing system of clause 17, wherein the predetermined camera model indicates at least one of a field of view angle, a pitch value, a tilt value, a roll value, a yaw value, or a pan value associated with the camera.
19. The videoconferencing system of clause 1, wherein the image transformation indicates one or more image adjustments, on a pixel-by-pixel basis, dependent on a difference between a first camera pan angle associated with the actual camera perspective and a second camera pan angle associated with the target camera perspective.
20. The videoconferencing system of clause 1, wherein the image transformation indicates one or more image adjustments, on a pixel-by-pixel basis, dependent on a difference between a first camera tilt angle associated with the actual camera perspective and a second camera tilt angle associated with the target camera perspective.
21. The videoconferencing system of clause 1, wherein the target camera perspective includes a plurality of different target camera perspectives, each associated with one or more corresponding image transformations.
22. The videoconferencing system of clause 21, wherein each of the one or more corresponding image transformations are applied to the one or more subframe regions of at least one of the plurality of image frames of the overview video stream to generate at least one image warped primary video stream representing a changing camera perspective.
23. The videoconferencing system of clause 22, wherein each of the one or more corresponding image transformations is applied to a same number of frames from among the plurality of image frames of the overview video stream.
24. The videoconferencing system of clause 22, wherein each of the one or more corresponding image transformations is applied to a linearly varying number of frames from among the plurality of image frames of the overview video stream.
25. The videoconferencing system of clause 22, wherein each of the one or more corresponding image transformations is applied to a nonlinearly varying number of frames from among the plurality of image frames of the overview video stream.
26. The videoconferencing system of clause 1, wherein the at least one processor is further programmed to provide at least one trained neural network configured to receive the at least one test frame and an indicator of the target camera perspective as inputs and output the at least one image transformation.
27. The videoconferencing system of clause 1, wherein the at least one processor is further programmed to provide at least one trained neural network configured to receive the at least one test frame as an input, determine the at least one region of interest represented in the test frame, and output the one or more indicators of actual camera perspective.
28. The videoconferencing system of clause 1, wherein the at least one processor is further programmed to provide at least one trained neural network configured to receive the at least one test frame and an indicator of the target camera perspective as inputs, determine the at least one region of interest represented in the test frame, determine the one or more indicators of actual camera perspective, determine the at least one image transformation, and output the at least one image warped primary video stream.
29. The videoconferencing system of clause 1, wherein the at least one processor is further programmed to provide at least one trained neural network configured to receive the at least one test frame as an input, determine the at least one region of interest represented in the test frame, determine the one or more indicators of actual camera perspective, determine the target camera perspective, determine the at least one image transformation, and output the at least one image warped primary video stream.
30. The videoconferencing system of clause 1, wherein the target camera perspective is along a line substantially normal to a center point associated with an object or videoconference participant represented in the at least one test frame.
31. The videoconferencing system of clause 1, wherein the target camera perspective is determined based on input received from a user of the videoconferencing system.
32. The videoconferencing system of clause 1, wherein application of the at least one image transformation is accomplished using an image warp mesh indicating, for a plurality of pixel coordinates of the image warp mesh, one or more transformations to apply relative to pixel coordinates of the overview video stream.
33. The videoconferencing system of clause 1, wherein the image warping unit is located on the camera.
34. The videoconferencing system of clause 1, wherein the image warping unit is remotely located relative to the camera.
35. The videoconferencing system of clause 1, wherein the videoconferencing system is a multi-camera videoconferencing system including a plurality of cameras, the camera being included in the plurality of cameras.
36. The videoconferencing system of any of clauses 1 to 32 or 35, wherein the image warping unit is located outside the camera, optionally on a USB device or a central computing device.
37. The videoconferencing system of any preceding clause, wherein the videoconferencing system is configured to adjust perspective views automatically and/or in real time using adaptive image warping.

## Claims

1. A videoconferencing system for adjusting perspective views using adaptive image warping, the system comprising:
an image warping unit including at least one processor programmed to:
receive an overview video stream from a camera in the videoconferencing system;
determine, based on analysis of at least one test frame from the overview video stream, at least one region of interest represented within the at least one test frame;
determine one or more indicators of actual camera perspective relative to the at least one region of interest;
determine a target camera perspective relative to the at least one region of interest, wherein the target camera perspective is different from the actual camera perspective;
determine at least one image transformation based on a difference between the actual camera perspective and the target camera perspective;
apply the at least one image transformation to one or more subframe regions of a plurality of image frames of the overview stream to generate at least one image warped primary video stream; and
cause the at least one image warped primary video stream to be shown on a display.

2. The videoconferencing system of claim 1, wherein the at least one region of interest includes:
a videoconference participant; and/or
two or more videoconference participants, optionally wherein the at least one region of interest includes: a first region of interest including a first videoconference participant and at least a second region of interest including a second videoconference participant; and/or
one or more objects.

3. The videoconferencing system of any preceding claim, wherein the at least one region of interest represented within the at least one test frame is determined by a trained neural network.

4. The videoconferencing system of any preceding claim, wherein the at least one region of interest is delineated by:
a rectangular boundary within the at least one test frame; or
a polygonal boundary within the at least one test frame, optionally wherein the polygonal boundary is a quadrangle.

5. The videoconferencing system of any of claims 1 to 3, wherein the at least one region of interest is delineated by a boundary in the at least one test frame that traces an outline of a perimeter associated with a representation of at least one videoconference participant.

6. The videoconferencing system of any preceding claim, wherein the one or more indicators of actual camera perspective relative to the at least one region of interest include:
coordinates, in a reference frame of the camera, of at least one point associated with a determined boundary delineating a representation of the at least one region of interest in the at least one test frame; and/or
coordinates, in a reference frame of the camera, of at least one point associated with an object or videoconference participant located in the at least one region of interest; and/or
coordinates, in a reference frame of the camera, for each of a plurality of pixels included in a representation of the at least one region of interest.

7. The videoconferencing system of any preceding claim, wherein the one or more indicators of actual camera perspective relative to the at least one region of interest are determined, at least in part, based on an output of a sensor separate from the camera, optionally wherein the sensor includes an accelerometer and/or a directional microphone.

8. The videoconferencing system of any preceding claim, wherein the one or more indicators of actual camera perspective relative to the at least one region of interest are determined, at least in part, based on a predetermined camera model, optionally wherein the predetermined camera model indicates at least one of a field of view angle, a pitch value, a tilt value, a roll value, a yaw value, or a pan value associated with the camera.

9. The videoconferencing system of any preceding claim, wherein the image transformation indicates one or more image adjustments, on a pixel-by-pixel basis, dependent on:
a difference between a first camera pan angle associated with the actual camera perspective and a second camera pan angle associated with the target camera perspective, and/or
a difference between a first camera tilt angle associated with the actual camera perspective and a second camera tilt angle associated with the target camera perspective.

10. The videoconferencing system of any preceding claim, wherein the target camera perspective includes a plurality of different target camera perspectives, each associated with one or more corresponding image transformations.

11. The videoconferencing system of claim 10, wherein each of the one or more corresponding image transformations are applied to the one or more subframe regions of at least one of the plurality of image frames of the overview video stream to generate at least one image warped primary video stream representing a changing camera perspective, optionally wherein each of the one or more corresponding image transformations is applied to:
a same number of frames from among the plurality of image frames of the overview video stream, or
a linearly varying number of frames from among the plurality of image frames of the overview video stream, or
a nonlinearly varying number of frames from among the plurality of image frames of the overview video stream.

12. The videoconferencing system of any preceding claim, wherein the at least one processor is further programmed to provide at least one trained neural network configured to:
receive the at least one test frame and an indicator of the target camera perspective as inputs and output the at least one image transformation; or
receive the at least one test frame as an input, determine the at least one region of interest represented in the test frame, and output the one or more indicators of actual camera perspective; or
receive the at least one test frame and an indicator of the target camera perspective as inputs, determine the at least one region of interest represented in the test frame, determine the one or more indicators of actual camera perspective, determine the at least one image transformation, and output the at least one image warped primary video stream; or
receive the at least one test frame as an input, determine the at least one region of interest represented in the test frame, determine the one or more indicators of actual camera perspective, determine the target camera perspective, determine the at least one image transformation, and output the at least one image warped primary video stream.

13. The videoconferencing system of any preceding claim, wherein the target camera perspective is:
along a line substantially normal to a center point associated with an object or videoconference participant represented in the at least one test frame, or
determined based on input received from a user of the videoconferencing system.

14. The videoconferencing system of any preceding claim, wherein application of the at least one image transformation is accomplished using an image warp mesh indicating, for a plurality of pixel coordinates of the image warp mesh, one or more transformations to apply relative to pixel coordinates of the overview video stream.

15. The videoconferencing system of any preceding claim, wherein:
the image warping unit is located on the camera; or
the image warping unit is located outside the camera, optionally on a USB device or a central computing device; or
the image warping unit is remotely located relative to the camera.

16. The videoconferencing system of any preceding claim, wherein the videoconferencing system is a multi-camera videoconferencing system including a plurality of cameras, the camera being included in the plurality of cameras.

17. The videoconferencing system of any preceding claim, wherein the videoconferencing system is configured to adjust perspective views automatically and/or in real time using adaptive image warping.

18. At least one processor programmed to:
receive an overview video stream from a camera in a videoconferencing system;
determine, based on analysis of at least one test frame from the overview video stream, at least one region of interest represented within the at least one test frame;
determine one or more indicators of actual camera perspective relative to the at least one region of interest;
determine a target camera perspective relative to the at least one region of interest, wherein the target camera perspective is different from the actual camera perspective;
determine at least one image transformation based on a difference between the actual camera perspective and the target camera perspective;
apply the at least one image transformation to one or more subframe regions of a plurality of image frames of the overview stream to generate at least one image warped primary video stream; and
cause the at least one image warped primary video stream to be shown on a display.

19. A method for adjusting perspective views using adaptive image warping performed by at least one processor, the method comprising:
receiving an overview video stream from a camera in the videoconferencing system;
determining, based on analysis of at least one test frame from the overview video stream, at least one region of interest represented within the at least one test frame;
determining one or more indicators of actual camera perspective relative to the at least one region of interest;
determining a target camera perspective relative to the at least one region of interest, wherein the target camera perspective is different from the actual camera perspective;
determining at least one image transformation based on a difference between the actual camera perspective and the target camera perspective;
applying the at least one image transformation to one or more subframe regions of a plurality of image frames of the overview stream to generate at least one image warped primary video stream; and
causing the at least one image warped primary video stream to be shown on a display.

20. One or more computer readable media storing instructions that, when executed by at least one processor, cause the at least one processor to perform the method of claim 19.
